# EUROPEAN PATENT APPLICATION

(11) **EP 3 816 045 A1**
(43) Date of publication of application: **05.05.2021**
(21) Application number: 20205268.4
(22) Date of filing: 02.11.2020
(51) Int. Cl.: B64C 39/02, B64D 11/00, B64F 5/30, B64F 5/40, B64F 5/60

(54) **INSPECTION AND SANITATION OF AN AIRCRAFT INTERIOR WITH AN UNMANNED AERIAL VEHICLE**

(30) Priority: 01.11.2019 US 201916671965
(71) Applicant: B/E Aerospace, Inc., Winston- Salem, NC 27105 (US)
(72) Inventor: JOHNSON, Glenn A., Rural Hall, NC 27045 (US); RAYBELL, Shawn W., Maple Valley, WA 98038 (US)
(74) Representative: Dehns

(57) **Abstract**

A system and method for autonomous inspection and sanitation of an aircraft interior cabin employs a plurality of unmanned aircraft system (UAS) (110) for autonomous operation to inspect, sense, identify, and cure an abnormality found onboard an aircraft cabin prior to passenger boarding. UAS mounted on a nearby jetway as well as in various locations throughout the aircraft cabin are equipped with a plurality of sensors to autonomously sense and cure, or sense and communicate to maintenance the identification and location of the abnormality. A single multi-role UAS inspects and sanitizes using onboard systems while multiple types of UAS including inspection UAS and sanitation UAS singularly function to sense an abnormality and sanitize if able or communicate to higher authority if unable to cure the abnormality.

## Description

### BACKGROUND

Upon landing, an aircraft interior cabin may be soiled and in need of cleaning. Normally, a cleaning crew may board the aircraft, inspect the cabin, clean the cabin and lavatories, and depart the cabin before new passengers may arrive. On occasion, a soiled or damaged state of a seat or lavatory may go unnoticed by departing aircrew and passengers. Left unclean, a soiled seat or cabin area may cause undue delay to a next departure of the aircraft.

Items left under a seat or within the aircraft cabin may additionally cause concern for passengers and crew. A high value carry on item may be invisible to a human inspection and remain onboard after an inspection.

Further, the aircraft interior may be equipped with a plurality of items required before a specific flight. A required item missing or being beyond an inspection date may cause concern for passengers and operators as well as an oversight authority.

Aircraft inspections by aircrew or maintenance personnel before passenger arrival may be time consuming, costly and ineffective. A stationary camera may be unable to visualize all areas of the aircraft interior cabin. A human may be unable to accurately determine a soiled passenger seat or a missing or expired life raft. Therefore, a need remains for a system and related method which may overcome these limitations and provide a novel solution to interior cabin inspection and sanitation.

### SUMMARY

In one aspect, embodiments of the inventive concepts disclosed herein are directed to a system for aircraft interior inspection and sanitation. The system may comprise an unmanned aircraft system (UAS), the UAS configured for an autonomous inspection and a sanitation of an interior cabin of an aircraft. The UAS may be configured to couple with a UAS perch including one of: a cabin perch and a jetway perch, the UAS perch including a UAS charging connection. Here, the UAS may be equipped with a UAS sensor and an active sanitation emitter. To locate an abnormal, the UAS sensor may be configured for sensing the abnormal within the aircraft cabin.

For control of the system a controller onboard the UAS may function to command operation of each subsystem onboard the UAS. For function, a tangible, non-transitory memory may be configured to communicate with the controller, the tangible, non-transitory memory having instructions stored therein that, in response to execution by the controller, cause the controller to carry out the missions of the system. The controller may function to receive an indication of an empty row within in the interior cabin and launch the UAS from the cabin perch and/or the jetway perch.

The controller may enable the UAS sensor and command the UAS to fly an inspection pattern within the interior cabin to search for any abnormal. Once sensed, the controller may identify the at least one abnormal and determine 1) a cure for the abnormal and 2) if the UAS is equipped to cure the abnormal. If equipped, the controller may cure the at least one abnormal with the active sanitation emitter or signal an appropriately configured UAS to launch and cure the abnormal if unable. Once complete, the controller may command a return of the UAS to the UAS perch and charge the UAS via the UAS charging connection.

A further embodiment of the inventive concepts disclosed herein may include a distributed system for aircraft interior inspection and sanitation. The system may comprise an unmanned aircraft system (UAS) including an inspection UAS configured for autonomous inspection of an interior cabin of an aircraft and a sanitation UAS configured for autonomous sanitation of the interior cabin. Here, a centralized maintenance authority may be configured to receive an input and command a function of the inspection UAS and the sanitation UAS. Here, the inspection UAS may be equipped with an UAS sensor and the sanitation UAS may be equipped with an active sanitation emitter.

In function, the UAS sensor may be configured for sensing an abnormal within the aircraft cabin and the active sanitation emitter may be configured for curing the abnormal. The inspection UAS and the sanitation UAS each may be configured to couple with a UAS perch including a cabin perch and a jetway perch, each including a UAS charging connection. In the distributed system, a controller may function within the centralized maintenance authority receiving instructions from a tangible, non-transitory memory configured to communicate with the controller, the tangible, non-transitory memory having instructions stored therein that, in response to execution by the controller, cause the controller to perform the function of the distributed system.

In function, the controller may receive an indication of an empty row within in the interior cabin and receive an indication of at least one open aircraft door. The controller may command a launch of the inspection UAS from one of: the cabin perch and the jetway perch and command the inspection UAS to fly an inspection pattern within the interior cabin searching for an abnormal. Should one be sensed, the controller may receive an indication of at least one abnormal from the inspection UAS and identify the at least one abnormal. The controller may determine 1) a cure for the at least one abnormal and 2) an appropriately equipped sanitation UAS to cure the at least one abnormal and command a launch of the appropriately equipped sanitation UAS to cure the at least one abnormal using the active sanitation emitter.

Should none of the UAS be configured to cure the abnormal, the controller may dispatch a maintenance technician to cure the abnormal if the appropriately equipped sanitation UAS is unable to cure the at least one abnormal. In either case, once the inspection is complete, the controller may return the inspection UAS and the appropriately equipped sanitation UAS to the UAS perch and charge the inspection UAS and appropriately equipped sanitation UAS via the UAS charging connection.

In one embodiment of the inventive concepts disclosed herein, a method for aircraft interior inspection and sanitation may comprise a flying inspection means for inspection of an interior aircraft cabin and a flying sanitation means for sanitizing at least one abnormal found by the flying inspection means. Also, the method may include a communication means sited within the flying inspection means for communicating the at least one abnormal and a perch means for 1) providing a charging means for supplying an electrical power to each of the flying inspection means and the flying sanitation means, 2) providing at least one supply means to the flying sanitation means For operational control, the method may include a communication means for notifying each of flying inspection means and the flying sanitation means of a flight clearance.

It is to be understood that both the foregoing general description and the following detailed description are exemplary and explanatory only and are not necessarily restrictive of the inventive concepts as claimed. The accompanying drawings, which are incorporated in and constitute a part of the specification, illustrate embodiments of the inventive concepts and together with the general description, serve to explain the principles of the inventive concepts disclosed herein.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings in which
FIG. 1 is an overview diagram of a system for autonomous aircraft interior inspection and sanitation in accordance with an embodiment of the inventive concepts disclosed herein;
FIG. 2 is a diagram of a UAS employed by the system for autonomous aircraft interior inspection and sanitation in accordance with an embodiment of the inventive concepts disclosed herein;
FIG. 3 is a system diagram of a distributed system for autonomous aircraft interior inspection and sanitation exemplary of an embodiment of the inventive concepts disclosed herein;
FIGs. 4A - 4D are diagrams of exemplary UAS available to the systems of one embodiment of the inventive concepts disclosed herein;
FIG. 5 is a diagram of an inspection UAS in accordance with one embodiment of the inventive concepts disclosed herein;
FIG. 6 is a diagram of a sanitation UAS exemplary of one embodiment of the inventive concepts disclosed herein;
FIGs. 7 through 10 are diagrams of one implementation of an exemplary embodiment of the inventive concepts disclosed herein;
FIG. 11 is a diagram of one implementation of an exemplary embodiment of the inventive concepts disclosed herein; and
FIG. 12 is a diagram of an exemplary logic flow in accordance with one embodiment of the inventive concepts disclosed herein.

### DETAILED DESCRIPTION OF EXEMPLARY EMBODIMENTS

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, thus "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

### OVERVIEW

Broadly, embodiments of the inventive concepts disclosed herein are directed to a system and method for autonomous inspection and sanitation of an aircraft interior cabin employs a plurality of unmanned aircraft system (UAS) for autonomous operation to inspect, sense, identify, and cure an abnormal found onboard an aircraft cabin prior to passenger boarding. UAS mounted on a nearby jetway as well as in various locations throughout the aircraft cabin are equipped with a plurality of sensors to autonomously sense and cure, or sense and communicate to maintenance the identification and location of the abnormal. A single multi-role UAS inspects and sanitizes using onboard systems while multiple types of UAS including inspection UAS and sanitation UAS singularly function to sense an abnormal and sanitize if able or communicate to higher authority if unable to cure the abnormal

**REFERENCE CHART**

| | |
|---|---|
| 100 | Overview Diagram |
| 110 | Unmanned Aircraft System (UAS) |
| 112 | UAS Sensor |
| 114 | Sensor Field of View (FOV) |
| 116 | UAS Memory |
| 118 | UAS Antenna |
| 120 | UAS Controller |
| 122 | UAS Battery |
| 124 | RFID Transmitter Receiver |
| 130 | Aircraft |
| 132 | Cabin Perch |
| 134 | Interior Baggage Hold |
| 136 | Aircraft Door |
| 138 | Interior Cabin |
| 140 | Passenger Seat |
| 142 | Cabin Sensor |
| 144 | Cabin Sensor Antenna |
| 146 | Smart Seat Antenna |
| 150 | Jetway |
| 152 | Jetway Perch |
| 200 | Onboard UAS Diagram |
| 210 | Inspection UAS |
| 212 | Active Sanitation Emitter |
| 220 | Payload |
| 222 | UAS Charging Connection |
| 230 | Perch Power |
| 232 | Perch Controller |
| 234 | Perch Memory |
| 236 | Perch Supplies |
| 238 | Perch Antenna |
| 254 | Jetway Antenna |
| 300 | Distributed System Detail |
| 302 | Maintenance Control (MC) |
| 304 | Wired Connection |
| 310 | Sanitation UAS |
| 320 | MC Controller |
| 324 | MC Memory |
| 400 | UAS Detail |
| 422 | Ultraviolet (UV) Light |
| 424 | UV Light FOV |
| 432 | Liquid Emitter |
| 434 | Liquid Emission |
| 442 | Gas / Heat Emitter |
| 444 | Gas Emission |
| 452 | Transport Attachment |
| 500 | Seat Inspection |
| 502 | Under seat Luggage |
| 504 | Seatbelt |
| 506 | Laptop |
| 510 | Inspection Pattern |
| 532 | Aft Cabin Perch |
| 532 | Aft Perch |
| 542 | Perch Door |
| 550 | Galley |
| 552 | Smart Oven |
| 554 | Smart Oven Antenna |
| 600 | Seat Sanitation |
| 602 | Sanitation Spray |
| 604 | Tray table |
| 606 | Trash |
| 630 | Lavatory |
| 632 | Lavatory Door |
| 634 | Lavatory Sink |
| 640 | Overhead Bin |
| 642 | Bin Door |
| 644 | Overhead Luggage |
| 650 | Emergency Equipment |
| 652 | Radio Frequency Identification (RFID) Tag |
| 700 | Implementation |
| 1100 | Jetway Implementation |
| 1200 | Loqic Flow |
| 1202 | Remain on perch |
| 1204 | Passengers in Row? |
| 1206 | Cabin door open? |
| 1208 | FWD / AFT UAS decision |
| 1210 | Jetway UAS decision |
| 1212 | Determine UAS to launch |
| 1214 | Launch UAS |
| 1216 | Abnormal in Cabin? |
| 1218 | ID Abnormal type |
| 1220 | Save abnormal location |
| 1222 | Communicate ID and Location |
| 1224 | UAS Properly equipped? |
| 1226 | Launch Sanitation UAS |
| 1228 | Cure the Abnormal |
| 1230 | Abnormal Cured? |
| 1232 | Dispatch Maintenance Tech |
| 1234 | Report to Maintenance |
| 1236 | Return to perch |
| 1238 | Charge / replenish UAS |

### FIG 1

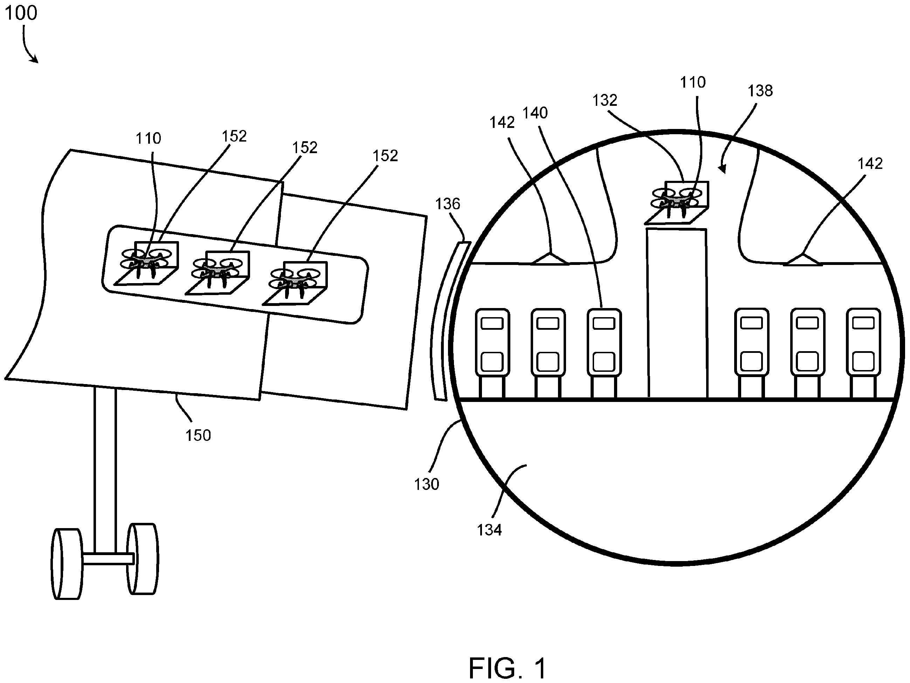

Referring to FIG. 1, an overview diagram 100 of a system for aircraft interior inspection and sanitation in accordance with an embodiment of the inventive concepts disclosed herein is shown. Generally, the system for autonomous aircraft interior inspection and sanitation 100 may function to autonomously inspect and cure an abnormal found onboard an aircraft 130 prior to passengers boarding the aircraft 130. The aircraft 130 may be parked near a jetway 150 for ease of passenger (hereinafter PAX) boarding. Systems herein may include an unmanned aircraft system (UAS) 110 configured for an inspection and a sanitation of an interior cabin 138 of the aircraft 130.

The aircraft 130 may include an aircraft interior cabin 138 and an interior baggage hold 134. In one embodiment of the inventive concepts disclosed herein, the within the aircraft interior cabin 138, the aircraft may include a cabin perch 132 for the UAS 110, an aircraft door 136, a PAX seat 140. Also, within an aircraft interior cabin 138, a cabin sensor 142 may function to sense a presence of one or more PAX within the aircraft interior cabin 138. Further, the cabin sensor 142 may function to sense a status of the aircraft door 136 in an open position or closed position.

The UAS perch may be sited on each of the jetway 150 with a jetway perch 152 and within the interior cabin 138 with the cabin perch 132. In embodiments, the UAS 110 may be configured to couple with the UAS perch including each of the cabin perch 132 and the jetway perch 152. Here, each of the perches 132 152 may include a UAS charging connection (wireless and wired) as well as additional UAS 110 support elements. Depending on a plurality of factors outlined below, the system may employ a UAS 110 from either or both of the jetway perch 152 and the cabin perch 132.

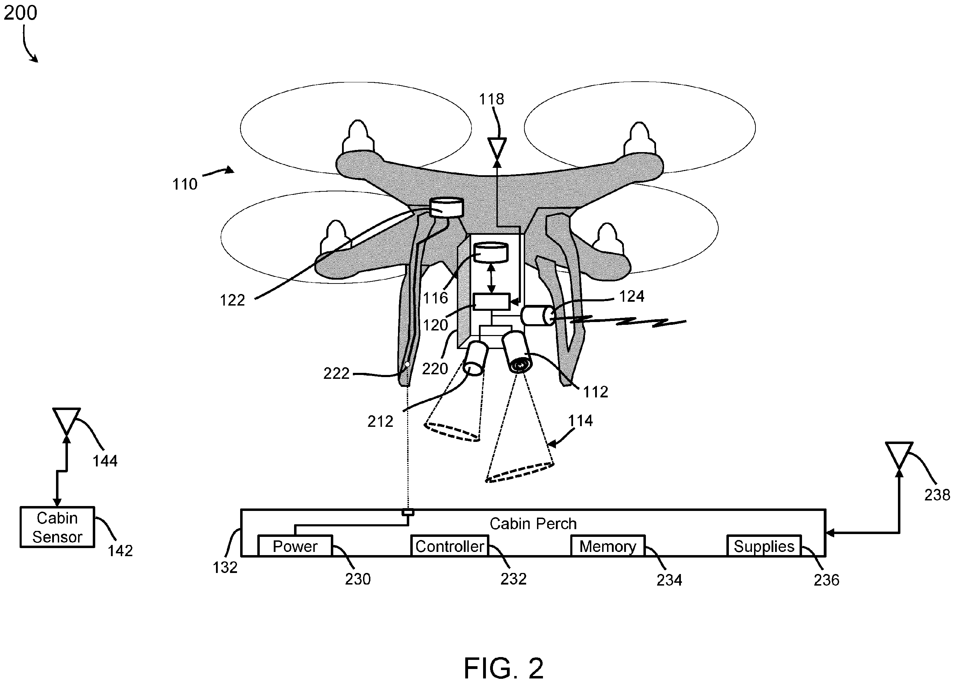

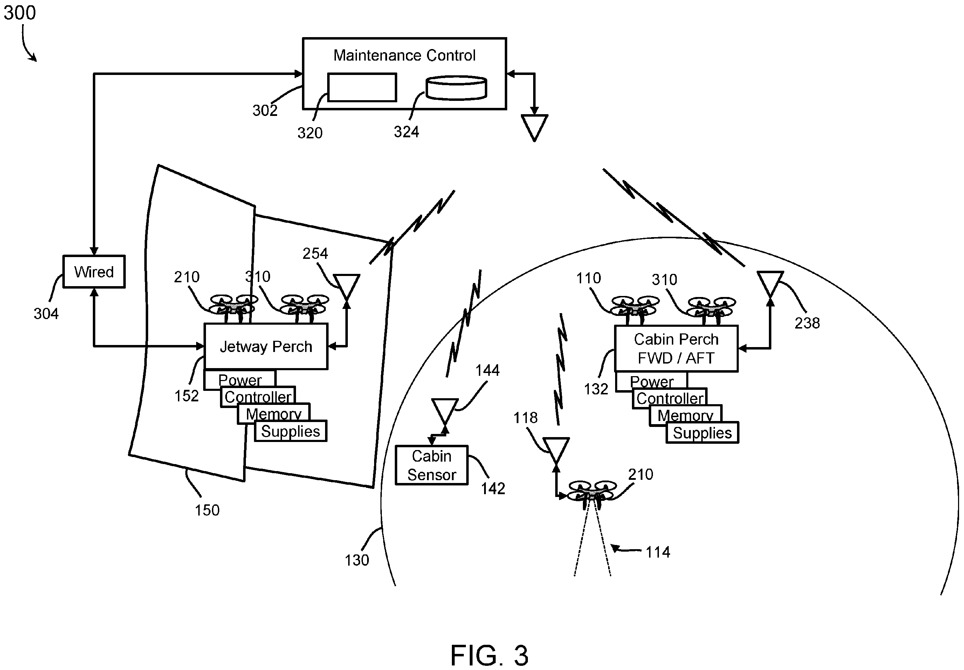

In one embodiment of the inventive concepts disclosed herein, the systems may employ a plurality of UAS 110 which may include an inspection UAS 210 (FIG 2), a sanitation UAS 310 (FIG 3) as well as a multi-role UAS 110 which may both inspect and sanitize areas within the interior cabin 138. As used herein, unless specifically noted otherwise, UAS 110 may refer to each type of UAS (110, 210, 310) described herein.

### FIG 2

Referring now to FIG. 2, a diagram of an onboard UAS system 200 for autonomous aircraft interior inspection and sanitation in accordance with an embodiment of the inventive concepts disclosed herein is shown. The onboard autonomous system 200 may include a plurality of UAS 110 including an inspection UAS 210 and possibly a sanitation UAS 310. The onboard autonomous system 200 may reside exclusively onboard the aircraft 130 where the UAS 110 may be equipped with a UAS sensor 112 and an active sanitation emitter 212. In addition to UAS 110 mounted on the cabin perch 132, the onboard autonomous system 200 may employ one or more UAS 110 coupled with the jetway perch 152 and commanded to launch from the jetway 150 through an open aircraft door 136 as sensed by the cabin sensor 142.

Each UAS 110 may include the UAS sensor 112 specifically configured to sense an abnormal within the interior cabin 138. The UAS sensor 112 may have a sensor field of view (FOV) 114 within which the UAS sensor 112 may sense the abnormal. The active sanitation emitter 212 may incorporate a plurality of delivery methods and sanitation supplies to cure the abnormal. In one embodiment of the inventive concepts disclosed herein, the active sanitation emitter 212 may include an ultra violet light, a liquid dispenser, a gas dispenser, and a heat emitter.

For enhanced inspection purposes, the UAS 110 may be configured to sense a radio frequency Identification Tag (RFID) employing an RFID transmitter receiver 124 onboard UAS 110. The RFID reader 124 may include a transmitter and receiver capable of excitation and reception of both active and passive RFID tags coupled with an item intended for preflight inspection. The RFID tag may include data identifying the item as well as an inspection date of the item and additional data fields.

As used herein, an abnormal may be defined as a situation within the interior cabin 138 which may delay or interrupt a timely departure of the aircraft 130. The abnormal may include a presence or an absence of a status or an object. For example, one abnormal may include a soiled situation on a passenger seat 140 or additional areas (e.g., carpet, walls, etc.) within the interior cabin 138. Another example may include a piece of equipment which is not in a proper place for departure. For example, a seat belt missing or damaged may be one abnormal requiring attention before the timely departure of the aircraft 130. An additional abnormal example may include a piece of emergency equipment missing or out of date for the planned departure.

Abnormals may also be separated into those which may be cured by one or more UAS 110 or those abnormals which require human intervention. For example, a slight discoloration of a passenger seat 140 may possibly be cured by one or more UAS 110 whereas a missing seat belt may require a human maintenance technician intervention to cure the abnormal.

In one embodiment of the inventive concepts disclosed herein, each UAS 110 may include a UAS memory 116, a UAS antenna 118, a UAS battery 122 rechargeable via a charging connection 222, and a UAS controller 120. Here, the UAS 110 may include a payload 220 which may include each of the UAS elements above. For example, one UAS payload 220 may include the UAS sensor 112, the UAS memory 116, the UAS antenna 118, and the UAS controller 120. The memory 116 may include a tangible, non-transitory memory 116 configured to communicate with the controller 120, the tangible, non-transitory memory 116 having instructions stored therein that, in response to execution by the controller 120, cause the controller 120 to carry out the steps according to the systems disclosed herein.

Contemplated herein, one UAS 110 may include a commercial off the shelf (COTS) UAS 110 coupled with a specifically designed payload 220 to transition the COTS UAS to one of the UAS 110 types. Conversely, the UAS 110 may be specifically configured around the payload 220 to incorporate an ability to fly the specific items desired to cure one or more anticipated abnormals.

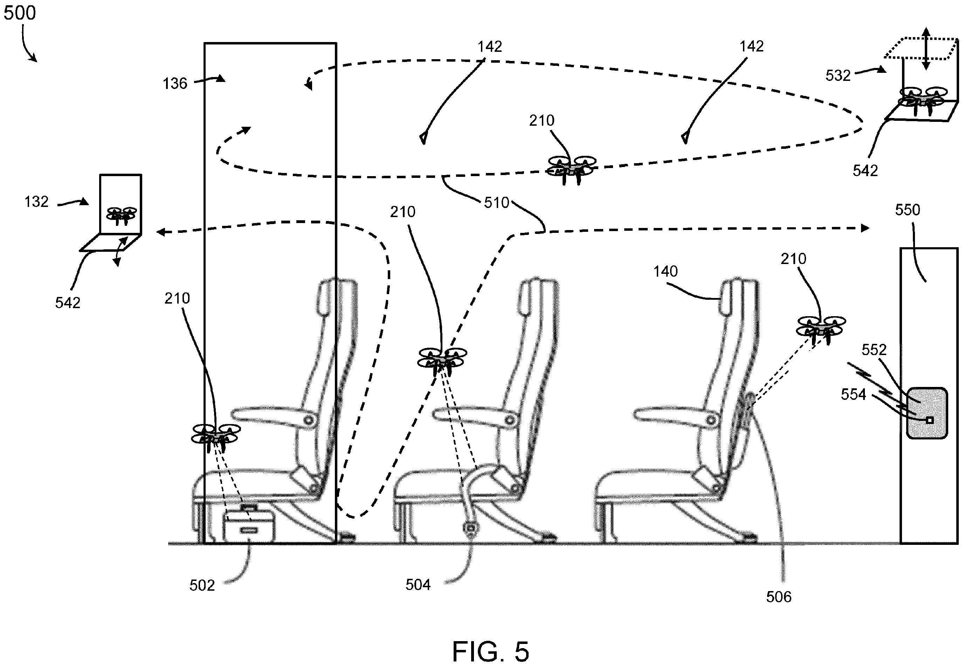

In additional embodiments, the UAS controller 120 may incorporate a processor capable of receiving an input from the UAS 110 (e.g., flight data) as well as from the UAS memory 116 (e.g., an inspection pattern 510 (FIG 5)) and providing an autopilot input to the UAS 110. The controller 120 may operatively couple with each element onboard the UAS 110 and configured for controlling each aspect of the flight of the UAS 110 as well as each operation of the payload 220.

The controller 120 may operatively couple with the RFID transmitter receiver 124 to send and receive frequencies associated with the RFID tags. In addition, the controller 120 may transmit and receive via the UAS antenna 118 on a plurality of additional frequencies. For example, each item of equipment onboard the aircraft 130 may be connectable with another via one or more wireless protocols for wireless transfer of information.

Contemplated herein, the controller 120 may communicate using a wireless transceiver and associated UAS antenna 118 with each item of equipment via the plurality of wireless protocols. For example, the controller 120 may communicate with each onboard equipment item via a wireless protocol such as an 802.11(x) and ARINC 810 wireless standard to transfer information to and from the equipment via one or more frequencies.

In one embodiment of the inventive concepts disclosed herein, each perch (here the cabin perch 132) may include a perch power 230 to provide a source to charge the UAS 110 battery 122 as well as provide a power source for perch 132 function including possible replenishment of the sanitation UAS 310. The perch power 230 may function to make a wired physical contact with the UAS 110 and provide a source for charging a UAS battery. For example, a UAS 110 charging connection on a landing skid of the UAS 110 may electrically connect the UAS battery 122 with the perch power 230 including a wired and a wireless charging of a UAS battery when coupled with the UAS perch. Further, the perch power 230 may connect with a wireless (e.g., induction) charging device for wirelessly charging the UAS battery 122.

A perch controller 232 may function to control each operation of the perch 132 152 including regulating the battery charge of the UAS 110 as well as receiving commands from the sanitation UAS 310 to replenish supplies. For example, the perch controller 132 may take and report an inventory of perch supplies 236, coordinate replenishment of the sanitation UAS 310, and communicate with additional perch locations to coordinate the overall autonomous mission. A perch memory 234 may store commands available to the perch controller 232 as well as data associated with the UAS 110.

In addition, the perch 132 152 may be equipped with a plurality of perch supplies 236 available to the sanitation UAS 310 to replenish each supply for which the sanitation UAS 310 may be equipped. For example, perch supplies 236 may include additional canisters of a liquid disinfectant spray and deodorizer gas for exchange with an empty canister onboard the sanitation UAS 310.

For communication, the perch 132 152 may include a perch antenna 238 for wireless data transfer to and from a plurality of locations. In one embodiment of the inventive concepts disclosed herein, the perch controller 232 and the UAS controller 120 may communicate via each respective antenna 118 238. For example, the UAS 110 memory may be size limited and able to store a certain amount of data whereas the perch memory may be less limited in size and able to store greater data, commands, and abnormal locations.

Shown here in FIG. 2, the UAS sensor 112 may be configured for sensing an abnormal within the aircraft cabin using the UAS sensor 112. Contemplated herein, the UAS sensor 112 may include a plurality of sensor types to accurately sense the abnormal. Some sensor types employed as the UAS sensor 112 may include a visual camera, an infrared camera, a focused humidity sensor, and a focused temperature sensor.

Visually, the UAS sensor 112 may sense one aspect of the interior cabin 138 that is out of place. For example, a seat belt missing or luggage remaining after PAX have deplaned. An infrared UAS sensor 112 may detect temperature differences around the interior cabin 138 which may indicate a cooler item or warmer item surrounded by a seat material. A focused humidity UAS sensor 112 may also indicate a presence of liquid on a PAX seat 140 or on the cabin floor. A focused temperature UAS sensor may be able to detect a small liquid spill as well as battery warmth in a seat pocket. With a small FOV 114, the UAS sensor 112 may be specifically capable of detecting a plurality of abnormals undetectable by a human inspector.

In one embodiment of the inventive concepts disclosed herein, the UAS 110 may autonomously receive an indication of an empty row, launch, inspect the interior cabin 138, and communicate back to a maintenance authority a presence or absence of each abnormal within the aircraft interior cabin 138. The controller 120 may function to receive an indication of an empty row within in the interior cabin 138 and launch the UAS from one of or both of the cabin perch 132 and the jetway perch 152.

To save fuel the UAS 110 may delay enabling the UAS sensor 112 until in a position to begin cabin inspection. The controller 112 may command the UAS 110 to enable the UAS sensor 112 and fly an inspection pattern within the interior cabin 138 to search for abnormals. The controller 120 may identify the abnormal based on a comparison of data received via the UAS sensor 112 with data stored within the memory 116 and determine 1) a cure for the abnormal and 2) if the UAS 110 is equipped to cure the abnormal. In one embodiment, the controller 120 may identify the abnormal by sensing the aircraft interior with the UAS sensor, storing sensed data to the memory 116, comparing the sensed data with a desired data, and declaring an abnormal if the comparing results in a non-match.

Here, the UAS 110 with multi-role capability may employ the active sanitation emitter 212 to cure the abnormal with the active sanitation emitter 212 if able. Should the controller 120 determine the UAS 110 is unable to cure the sensed abnormal, the controller 120 may signal an appropriately configured UAS to launch and cure the abnormal. Once the flight pattern is complete, the controller 120 may return the UAS 110 to the UAS cabin perch 132 and charge the UAS 110 via the UAS charging connection associated with the perch power 230.

### FIG 3

Referring now to FIG. 3, a system diagram of a distributed autonomous system 300 for aircraft interior inspection and sanitation exemplary of an embodiment of the inventive concepts disclosed herein is shown. The distributed autonomous system detail 300 may include a centralized maintenance authority and control (MC) 302 sited in a convenient location for efficient operation. For example, the MC 302 may be sited on the jetway 150 as well as in a nearby terminal. With less restriction on weight and processing power, the MC 302 may maintain unlimited weight and size unlike the onboard autonomous system 200.

The distributed autonomous system 300 may include the UAS 110 including the inspection UAS 210 configured for an autonomous inspection of the interior cabin 138 of an aircraft 130 and the sanitation UAS 310 configured for an autonomous sanitation of the interior cabin 138. Here, the inspection UAS 210 may be equipped with the UAS sensor 112 and the sanitation UAS 310 may be equipped with the active sanitation emitter 212. The UAS sensor 112 may be configured for sensing an abnormal within the aircraft interior cabin 138 while the active sanitation emitter 212 may be configured for curing the abnormal. Here, each of the inspection UAS 210 and the sanitation UAS 310 may be similarly configured to couple with the UAS perch including the cabin perch 132 and the jetway perch 152, each perch including the UAS charging connection.

The MC 302 may be operatively connected via a wired connection 304 via a jetway antenna 254 to the jetway perch 152 and a wireless connection with the cabin perch 132. Here, the sanitation UAS 310 may be greater in size than the inspection UAS 210 to offer extra lift to increase the payload 220. Within the MC 302, a MC controller 320 may control each function of the distributed autonomous system 300 with stored instructions from a MC Memory 324. In function, the MC 302 may be configured to receive an input and command a launch of one of the inspection UAS 210 and the sanitation UAS 310.

In one embodiment of the inventive concepts disclosed herein, the MC controller 320 may receive an indication of an empty row within in the interior cabin 138, receive an indication of at least one open aircraft door 136 and command a launch of the inspection UAS 210 from one or both perches 132 152. The MC controller 320 may command the inspection UAS 210 to fly the inspection pattern 510 within the interior cabin 138 to search for any abnormals and receive an indication of the abnormal from the inspection UAS 210.

In embodiments, the MC controller 320 may identify the abnormal and determine 1) a cure for the at least one abnormal and 2) an appropriately equipped sanitation UAS 310 to cure the at least one abnormal. To cure, the MC controller 320 may determine to launch the sanitation UAS 310 from the cabin perch 132 or the jetway perch based on the abnormal ID and which appropriately equipped sanitation UAS 310 may be best suited to cure the abnormal using the active sanitation emitter 212. Should the MC controller 320 determine the appropriately equipped sanitation UAS 310 is unable to cure the abnormal as well as if the abnormal ID indicates no appropriately configured sanitation UAS 310 are available, the MC controller 320 may dispatch a maintenance technician to cure the abnormal.

The MC controller 320 may command a return of the inspection UAS 210 and the appropriately equipped sanitation UAS 310 to the UAS perch 132 152 and charge each UAS 210 310 via the UAS charging connection.

Within the interior cabin 138, the cabin perch 132 may be sited in a plurality of locations housing a plurality of inspection UAS 210 and sanitation UAS 310. Contemplated herein, a forward (FWD) cabin perch 132, a MID cabin perch 132 and an AFT cabin perch 132 may be useful to the systems herein. Depending on aircraft size, one inspection UAS 210 or a fleet of inspection UAS 210 may function to complete the mission of autonomous cabin inspection for abnormals and communication thereof.

Further contemplated herein, the cabin sensor(s) 142 may indicate to the inspection UAS 210 of which rows within the interior cabin 138 are emptying as well as a trend of rows which are being vacated by deplaning PAX. Here, the cabin sensor(s) 142 may be sited in each row or able to sense PAX presence among multiple rows and function to communicate a direction of an indication of an empty row within in the interior cabin. Aggregated with additional cabin sensors 142, the systems herein may determine a flow indication of a direction of passenger exit and a launch of the inspection UAS 210 from a UAS perch opposite the direction of passenger exit. For example, should the PAX begin to exit via the forward aircraft door, the rear rows may begin to become free of PAX. Here, a launch of the inspection UAS 210 from the AFT cabin perch 132 may be one option.

### FIG 4A-4D

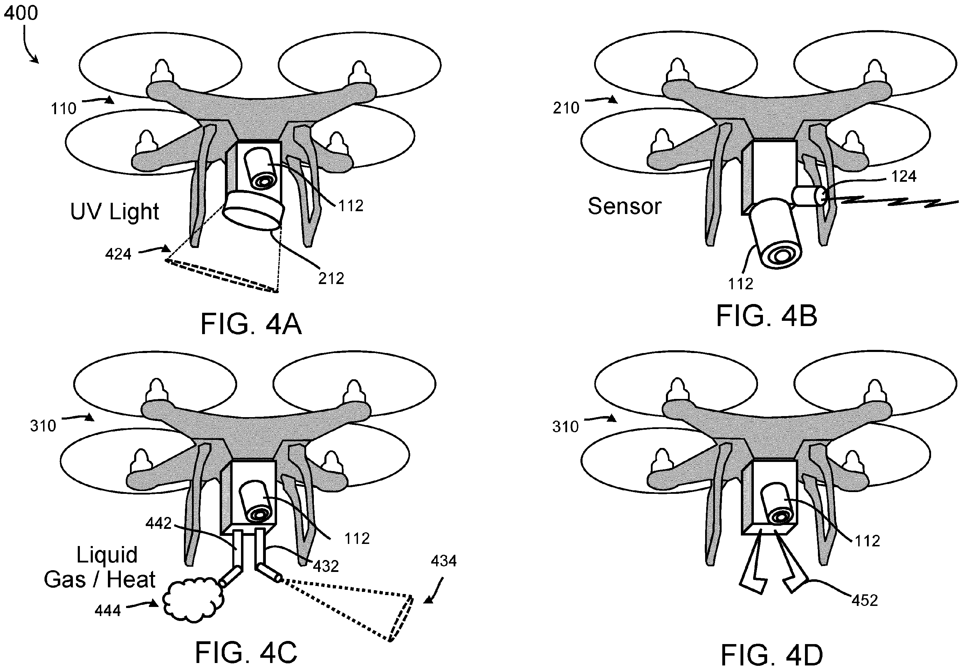

Referring now to FIGs. 4A-4D, diagrams of exemplary UAS available to the systems of one embodiment of the inventive concepts disclosed herein are shown. In one embodiment of the inventive concepts disclosed herein, the UAS detail 400 may include the UAS 110 configured for multi-role inspection and sanitation using the UAS sensor 112 and here, an ultraviolet (UV) Light 422 having a UV light FOV 424 for sanitation.

Considering limitations on lift and payload 220 capability, systems herein may employ single mission UAS including the inspection UAS 210 housing the UAS sensor 112 and the sanitation UAS 310 housing one of a liquid emitter 432 capable of producing a liquid emission 434 and a gas / heat emitter 442 capable of producing a gas emission 444.

Contemplated herein, the UV light 422 may function to produce an Ultraviolet germicidal irradiation (UVGI) using short-wavelength ultraviolet (UV-C) to disinfect a surface to which the UV FOV 424 is applied. The liquid emitter 432 may function to produce a plurality of liquid particles to cure an abnormal requiring such a liquid application. For example, one liquid emitter 432 may include a bleach, alcohol, barbicide, and citrus based liquid to sanitize a surface on which the liquid may be applied. As above, each perch 132 152 may include a supply of each desired liquid for sanitation UAS 310 replenishment.

The gas heat emitter 442 may include such supplies as a gaseous air freshener as well as a fan blown heat emitter. One abnormal may include a mere water spill on a PAX seat 140 easily curable and dried by the fan blown heat emitter.

In one embodiment of the inventive concepts disclosed herein, the sanitation UAS 310 may be configured with a transport attachment 452 enabling the sanitation UAS to grip or hold an item to transport the item to another location. For example, a transport attachment may grip an item of trash and transport it to a central refuse deposit. Similarly, the transport attachment 452 may hold a portable electronic device (PED) (e.g., cell phone) for transport to a location, for example, where the PAX owner of the PED or gate agent is waiting.

### FIG 5

Referring now to FIG. 5, a diagram of an inspection UAS in accordance with one embodiment of the inventive concepts disclosed herein is shown. A seat inspection 500 may include the inspection pattern 510 offering a complete inspection of the interior cabin 138 by one or more multi-role UAS 110 as well as the inspection UAS 210. Within one of the memory sources including the UAS memory 116 and the MC memory 324 each aircraft interior cabin 138 map may be stored within the memory 116 324 and distributed to a flight control system onboard the UAS 110 to determine the flight path and flight clearance available to the UAS 110.

The inspection pattern may proceed through the interior cabin 138 to search for the plurality of abnormals including an under-seat luggage 502, a seatbelt 504 not appropriately rigged for PAX boarding as well as missing, a laptop 506 emitting an infrared heat source from its battery as well as being visible to the visual UAS sensor.

The controller 120 may also function to determine a position of the UAS 110 as the UAS 110 may travel via the inspection pattern 510 throughout the interior cabin 138. In one example, in addition to inertial sensors within the UAS 110, the cabin sensors 142 may also function as location sensors for the UAS 110 to triangulate its position within the interior cabin 138. The cabin sensors 142 may emit a low power signal receivable by the UAS antenna 118 allowing the UAS 110 to determine a 3D position within the interior cabin 138.

Detailed here, the cabin perch 132 may further include an aft cabin perch 532 where the UAS controller 120 may determine, based on the PAX flow from the cabin sensors 140, the direction of deplaning PAX and launch the UAS 110 from the aft cabin perch 532 to inspect empty rows as the PAX move forward toward the forward cabin door 136. The aft cabin perch 532 may be sited in a location where space may permit. In one embodiment, the aft (and FWD) cabin perch 532 may be sited in a compartment in the overhead ceiling and within monument side walls of the interior cabin 138. In the overhead ceiling example, the controller 120 may signal a perch door 542 to open (e.g., rotation, translation) revealing the UAS 110 enabling the UAS to fly from the perch compartment.

In one embodiment of the inventive concepts disclosed herein, the inspection pattern is based on an input defining 1) a layout of the interior cabin, 2) a seat map of the interior cabin, 3) a passenger population map for a recently completed flight, 4) a passenger identification per seat, and 5) a location of equipment coupled with an RFID tag. For example, should an aircraft fly a leg from A to B half full, the input may allow for a launch of one of the UAS 110 sooner than if the aircraft were full. Similarly, with a PAX ID per seat, the onboard autonomous system 200 may communicate a location of the abnormal allowing notification of the PAX who has left something on the aircraft.

In one embodiment of the inventive concepts disclosed herein, the inspection UAS 210 may send and receive information via wireless protocol with a so equipped item of equipment onboard the aircraft 130. Here, an aircraft galley 550 may be equipped with a "smart" oven 552. Such oven 552 may be capable of running a build in test (BIT) and analysis of oven system status and oven function. As the inspection UAS 210 may be within range of the wireless systems within the oven 552, the inspection UAS 210, equipped with a wireless transceiver and UAS antenna 118, may receive the system status of the oven 552 via an oven antenna 554. Once received, the inspection UAS 210 may then store the status within memory 116 as well as relay the status to maintenance control 302 via the perch antenna 238.

### FIG 6

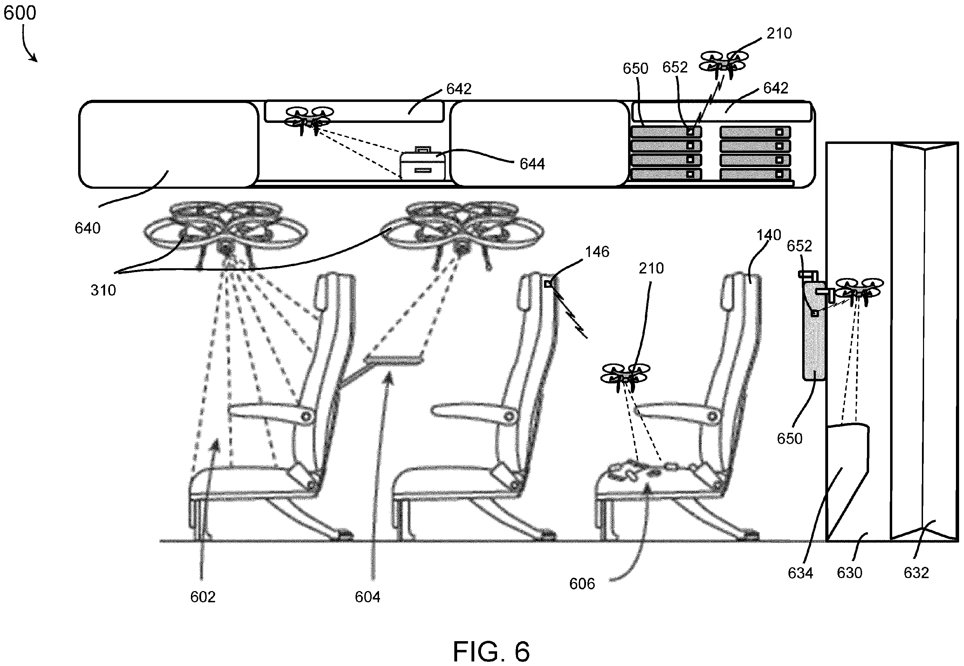

Referring now to FIG. 6, a diagram of a sanitation UAS exemplary of one embodiment of the inventive concepts disclosed herein is shown. A diagram of a seat sanitation 600 may include those larger sanitation UAS 310 configured for carriage of a large payload 220. Here, a sanitation spray 602 may function to disinfect the PAX seat 140 as well as a tray table 604. The inspection UAS 210 may ID a trash 606 abnormal as well as an overhead luggage 644 sensed with an open bid door 642 of an overhead bin 640.

Further, the inspection pattern 510 may include each lavatory 630 should a lavatory door 632 be opened to search / sense for abnormals therein as well as a routine sanitation of a lavatory sink 634 and toilet.

In one embodiment of the inventive concepts disclosed herein, the inspection UAS 210 may function to perform a security inspection to investigate areas of the interior cabin 138 for security purposes. Here, the inspection UAS 210 may be relatively small in size enabling entry into tightly enclosed areas of the interior cabin 138. With a setup from a crewmember to open one or more compartments, the inspection UAS 210 may fly the inspection pattern 510 to include areas difficult to inspect by a crewmember. For example, the inspection UAS 210 may inspect under PAX seats 140, above cabin monuments, and within opened compartments of the interior cabin 138.

For enhanced preflight inspection, the inspection UAS 210 may sense information associated with each properly equipped item of equipment onboard the aircraft 130. The RFID transmitter receiver 124 may function to actively excite a plurality of RFID tags 652 individually as well as aggregately to determine an inventory of and information about the equipment 650 to which the RFID tag 652 may be attached. Here, the inspection UAS 210 may excite the passive version of the RFID tag 652 or receive data from an active version of the RFID tag 652 and record to the memory 116 each detail about the equipment 650. In one example, the equipment 650 may include safety equipment such as a life vest, fire extinguisher, and a portable breathing equipment (PBE) to include a presence of the equipment, an inspection date of the equipment 650, and each additional detail of the equipment 650.

For example, a large aircraft may include multiple decks and associated plurality of safety equipment. Each individual item of safety equipment may require a periodic inspection to maintain a desired function. An Airbus 380-800 with 868 PAX may require an periodic inspection of each life vest. The inspection UAS 210 may excite the passive RFID tag on each of the 868 life vests and report to maintenance control an inventory as well as an approaching expiration date of any one item.

### FIGS 7-10

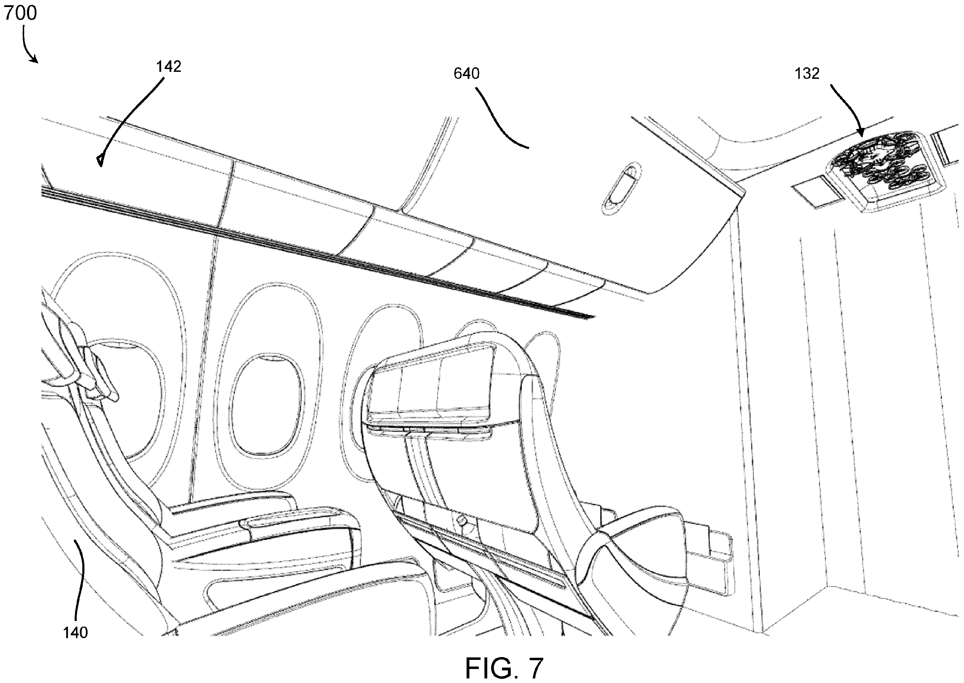

Referring to FIGs. 7-10, an exemplary implementation of the system 100 may indicate the UAS 110 stored within the cabin perch 132 with the perch door 542 open. The cabin sensor 142 may indicate to the system 100 that no PAX are within the rows to be inspected. Here, the main cabin door 136 may be closed enabling the onboard UAS 110 to perform the functions.

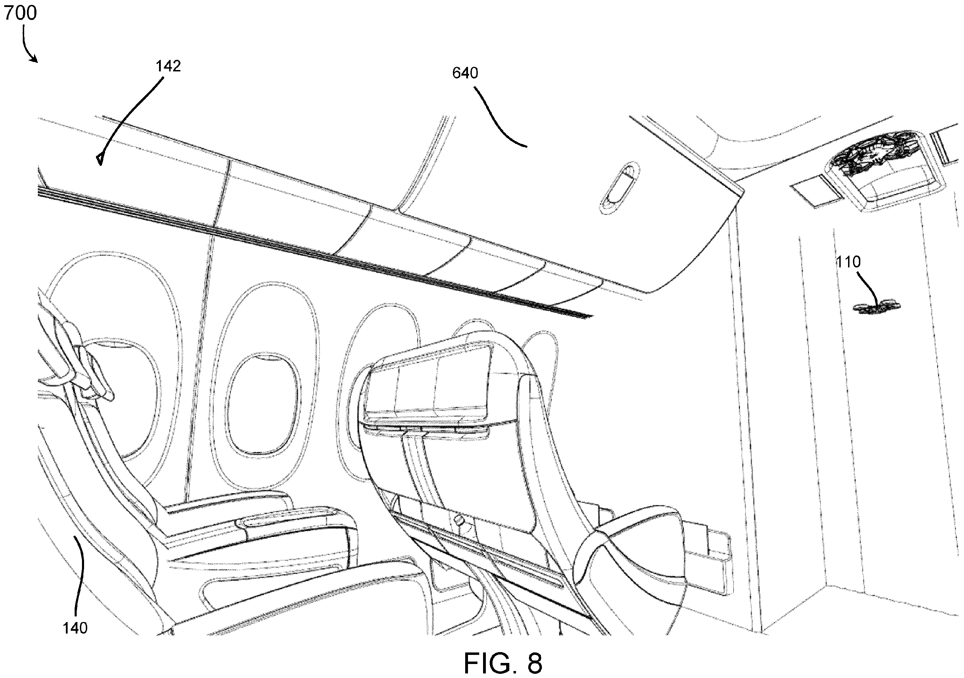

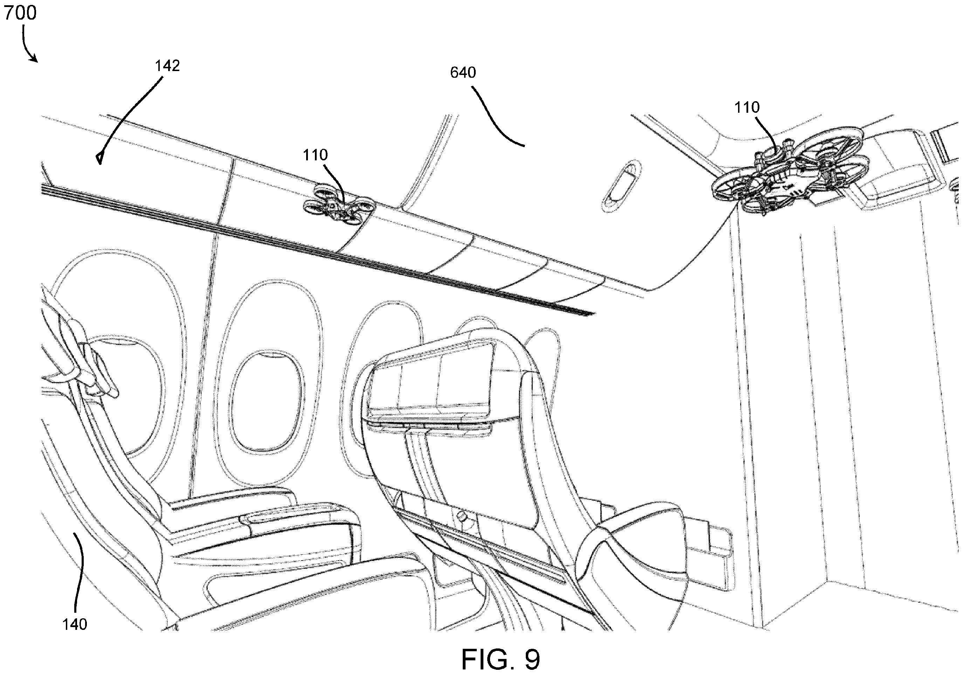

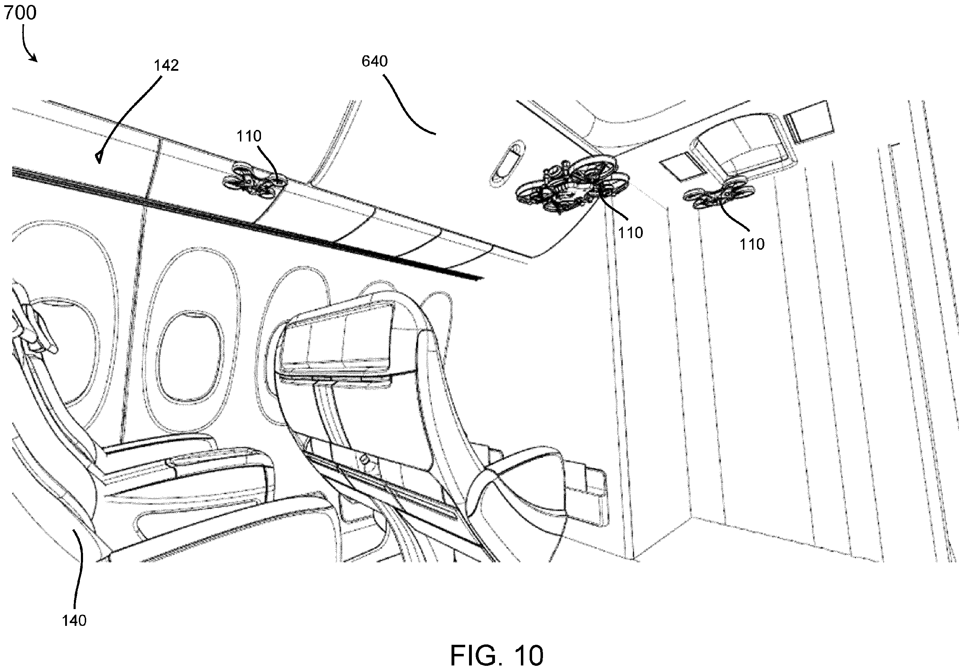

Fig. 8 may indicate a deployment of the UAS 110 from the cabin perch 132 to begin the cabin inspection. Fig. 9 may indicate multiple UAS 110 now deployed from the cabin perch 132 to begin the inspection and sanitation of the aircraft interior cabin. Fig. 10 may indicate all UAS 110 deployed from the FWD cabin perch 132.

### FIG 11

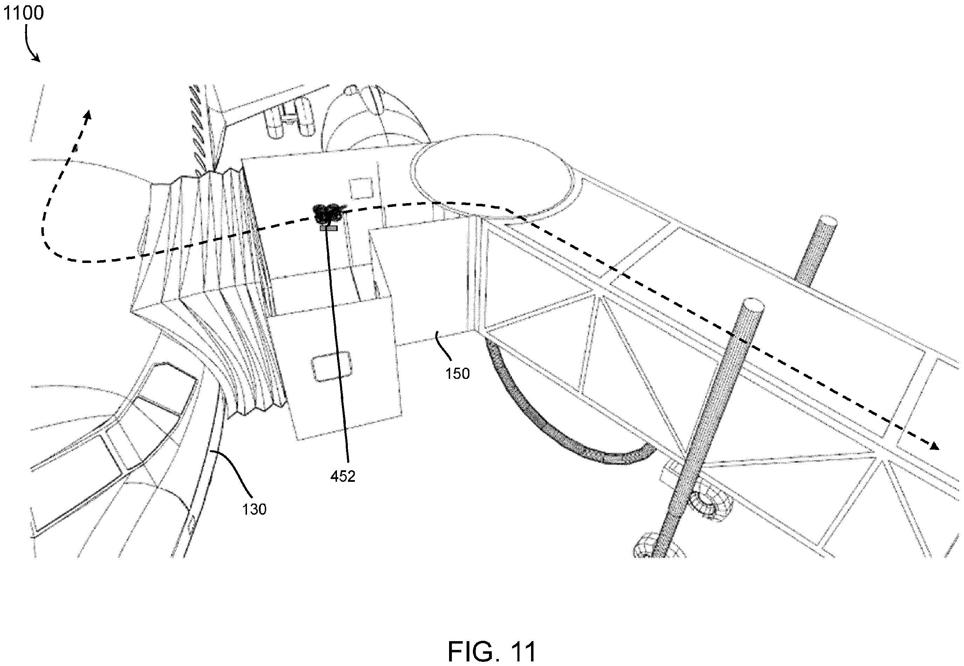

Referring to FIG. 11, an exemplary implementation of the system 100 may indicate an ability of the UAS 110 to capture a lost item via the transport attachment 452 and deliver the lost item up the jetway 150 to a gate area. As an area beyond the door of a gate area may be secure where no PAX may enter, a PAX may have left an item (e.g., cell phone) onboard the aircraft 130 without a way to retrieve the lost item. The UAS 110 may capture the item with the transport attachment 452 and deliver the item to the waiting PAX in the gate area.

### FIG 12

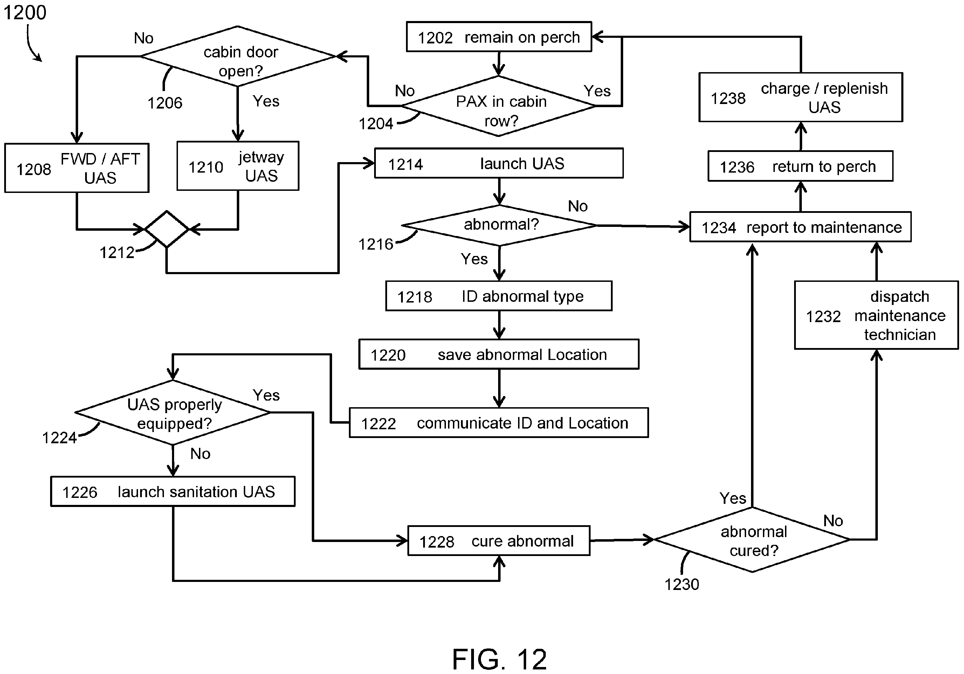

Referring now to FIG. 12, an exemplary logic flow 1200 in accordance with one embodiment of the inventive concepts disclosed herein is shown. Each of the systems herein 200 300 may support the mission of autonomous inspection and sanitation of the interior cabin 138 and further communication of any abnormal the UAS 110 may be unable to cure. In one embodiment of the inventive concepts disclosed herein, one series of logic may begin with the UAS 110 remaining on perch at a step 1202 and query, at a step 1204, and a question if passengers may still be in a row and if the cabin door is open at a query 1206. Should the result of query 1204 may positive, the logic may return to step 1202 keep the UAS 110 on the perch.

Should the result of query 1204 be positive and the result of 1206 be positive, the logic may pass to the following steps to determine which of the perches to use to launch the UAS 110. Should the cabin door be open, the controller may determine which of the jetway perch and/or the cabin perches may be desired based on a plurality of factors including anticipated abnormals, connected equipment onboard, aircraft size, available UAS size and loadout, and length of the previous flight. Should the cabin door be closed, the controller may determine, at a decision step 1208, which of the FWD / AFT UAS may launch. Should the cabin door be open, the controller may include the jetway perch in the decision process, at a determining step 1212, to determine which FWD / AFT / Jetway perch may launch the UAS 110.

A step 1214 may launch the UAS 110 followed by a query if an abnormal in cabin at a step 1216. Should the result of query 1216 be negative, the logic may pass to a step 1234 report to maintenance, return to perch at a step 1236, and charge / replenish UAS at a step 1238. However, should the result of query 1216 be positive, the logic may pass to ID abnormal type at a step 1218, save abnormal location at a step 1220, and communicate ID and location at a step 1222.

The logic may continue to determine if the UAS is properly equipped to cure the abnormal at a step 1224 and, if not, to launch the sanitation UAS at a step 1226 or, if yes, to cure the abnormal at a step 1228. To return feedback to the controller, the logic may continue to determine if the abnormal is cured at a query 1230. Should the result be positive, the logic may pass to the steps 1234-1238 as above. Should the result of query 1230 be negative, the logic may pass to dispatch a maintenance technician at a step 1232 to possibly manually cure the abnormal.

### CONCLUSION

As will be appreciated from the above description, embodiments of the inventive concepts disclosed herein may provide a novel solution to interior cabin inspection and sanitation.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the invention as defined by the claims.

## Claims

1. A system for autonomous aircraft interior inspection and sanitation, comprising:
an unmanned aircraft system, UAS (110), the UAS configured for an autonomous inspection and a sanitation of an interior cabin of an aircraft;
the UAS configured to couple with a UAS perch (132) including one of: a cabin perch and a jetway perch;
the UAS equipped with at least one of: a UAS sensor (112) and an active sanitation emitter;
the UAS sensor configured for sensing at least one abnormality (1216) within the aircraft cabin (138);
a controller (120) onboard the UAS;
a tangible, non-transitory memory (116) configured to communicate with the controller, the tangible, non-transitory memory having instructions stored therein that, in response to execution by the controller, cause the controller to:
receive an indication of an empty row within in the interior cabin;
launch the UAS from one of: the cabin perch and the jetway perch;
enable the UAS sensor;
fly an inspection pattern within the interior cabin to search for the at least one abnormality;
identify the at least one abnormality;
determine 1) a cure for the at least one abnormality and 2) if the UAS is equipped to cure the at least one abnormality;
cure the at least one abnormality with the active sanitation emitter if able;
signal an appropriately configured UAS to launch and cure the at least one abnormality if unable; and
return the UAS to the UAS perch.

2. The system for autonomous aircraft interior inspection and sanitation of claim 1, wherein the UAS sensor further comprises a visual camera, an infrared camera, a focused humidity sensor, a wireless transceiver, a radio frequency identification, RFID, transmitter receiver (124), and a focused temperature sensor.

3. The system for autonomous aircraft interior inspection and sanitation of claim 2, wherein the inspection pattern is based on at least one input defining 1) a layout of the interior cabin, 2) a seat map of the interior cabin, 3) a passenger population map for a recently completed flight, 4) a passenger identification per seat, and 5) a location of at least one RFID tagged aircraft equipment.

4. The system for autonomous aircraft interior inspection and sanitation of any preceding claim, wherein identifying the at least one abnormality further comprises communicating the at least one abnormality with a maintenance authority.

5. The system for autonomous aircraft interior inspection and sanitation of any preceding claim, wherein the indication of an empty row within in the interior cabin further comprises an indication of at least one open cabin door (36).

6. The system for autonomous aircraft interior inspection and sanitation of claim 5, wherein the indication of the at least one open cabin door further includes a determination to launch the UAS from one of: the cabin perch and the jetway perch.

7. The system for autonomous aircraft interior inspection and sanitation of any preceding claim, wherein the indication of an empty row within in the interior cabin further comprises a flow indication of a direction of passenger exit and a launch of the UAS from a UAS perch opposite the flow indication.

8. The system for autonomous aircraft interior inspection and sanitation of any preceding claim, wherein the active sanitation emitter includes one of: an ultra violet light (422), a liquid dispenser (432), a gas dispenser (442), and a heat emitter (442).

9. The system for autonomous aircraft interior inspection and sanitation of any preceding claim, wherein identifying the at least one abnormality further comprises sensing the aircraft interior with the UAS sensor, storing a sensed data to the non-transitory memory, comparing the sensed data with a desired data, and declaring an abnormal if the comparing results in a non-match.

10. The system for autonomous aircraft interior inspection and sanitation of any preceding claim, wherein the UAS is further configured with a UAS charging connection (222) including one of a wired and a wireless charging of a UAS battery (122) when coupled with the UAS perch.

11. The system for autonomous aircraft interior inspection and sanitation of claim 4, wherein signaling the appropriately configured UAS further includes communicating with the maintenance authority if no appropriately configured UAS is available.

12. A system for aircraft interior inspection and sanitation, comprising:
an unmanned aircraft system, UAS (110), including an inspection UAS configured for an autonomous inspection of an interior cabin (138) of an aircraft and a sanitation UAS configured for an autonomous sanitation of the interior cabin;
a centralized maintenance authority (302) configured at least to receive an input and command a function of at least one of the inspection UAS and the sanitation UAS;
the inspection UAS equipped with an UAS sensor (112), the sanitation UAS equipped with an active sanitation emitter;
the UAS sensor configured for sensing at least one abnormality within the aircraft cabin, the active sanitation emitter configured for curing the at least one abnormal;
the inspection UAS and the sanitation UAS each configured to couple with a UAS perch including one of: a cabin perch (132) and a jetway perch (152), the UAS perch including a UAS charging connection (222);
a controller (320) within the centralized maintenance authority;
a tangible, non-transitory memory (324) configured to communicate with the controller, the tangible, non-transitory memory having instructions stored therein that, in response to execution by the controller, cause the controller to:
receive an indication of an empty row within in the interior cabin;
receive an indication of at least one open aircraft door;
command a launch of the inspection UAS from one of: the cabin perch and the jetway perch;
command the inspection UAS to fly an inspection pattern within the interior cabin to search for at least one abnormality;
receive an indication of at least one abnormality from the inspection UAS;
identify the at least one abnormality;
determine 1) a cure for the at least one abnormality and 2) an appropriately equipped sanitation UAS to cure the at least one abnormality;
command a launch of the appropriately equipped sanitation UAS to cure the at least one abnormality using the active sanitation emitter;
dispatch a maintenance technician to cure the at least one abnormality if the appropriately equipped sanitation UAS is unable to cure the at least one abnormality;
return the inspection UAS and the appropriately equipped sanitation UAS to the UAS perch; and
charge the inspection UAS and appropriately equipped sanitation UAS via the UAS charging connection.

13. The system for aircraft interior inspection and sanitation of claim 12, wherein the UAS perch further includes a perch controller (232), a perch memory, and a plurality of sanitation UAS supplies (236).

14. The system for aircraft interior inspection and sanitation of claim 12, wherein the jetway perch is operatively coupled with the maintenance authority via one of a wired and a wireless connection.

15. A method for aircraft interior inspection and sanitation, comprising:
a flying inspection means for inspection of an interior aircraft cabin;
a sensing means coupled with the flying inspection means, the sensing means configured for sensing at least one abnormality;
a flying sanitation means for sanitizing the at least one abnormality sensed by the flying inspection means;
a communication means sited within the flying inspection means for communicating the at least one abnormality;
a perch means for 1) providing a charging means for supplying an electrical power to each of the flying inspection means and the flying sanitation means, 2) providing at least one supply means to the flying sanitation means; and
a communication means for notifying each of the flying inspection means and the flying sanitation means of a flight clearance.
